# EUROPÄISCHE PATENTSCHRIFT

(11) **EP 0 608 491 B1**
(45) Veröffentlichungstag und Bekanntmachung des Hinweises auf die Patenterteilung: **21.05.1997**
(21) Anmeldenummer: 93117201.9
(22) Anmeldetag: 23.10.1993
(51) Int. Cl.: F16K 17/10, E21D 15/51

(54) **Grossvolumiges Druckbegrenzungsventil**
Pressure relief valve for large rate of flow
Limiteur de pression à débit volumineux

(30) Priorität: 27.01.1993 DE 4302080
(43) Veröffentlichungstag der Anmeldung: 03.08.1994
(73) Patentinhaber: RICHARD VOSS GRUBENAUSBAU GMBH, 58239 Schwerte (DE)
(72) Erfinder: Voss, Richard, D-58239 Schwerte (DE); Voss, Wolfgang, D-58239 Schwerte (DE)
(74) Vertreter: Schulte, Jörg, Dipl.-Ing.

(56) Entgegenhaltungen:
- WO-A-91/03621
- DE-A- 2 547 646
- DE-A- 2 949 629
- DE-A- 3 314 837
- DE-A- 3 637 888
- DE-A- 3 929 094
- DE-A- 4 030 386
- DE-B- 1 182 921

## Beschreibung

Die Erfindung betrifft ein Druckbegrenzungsventil zum Schutz hydraulischer Einheiten, des hydraulischen Strebausbaues untertägiger Betriebe gegen Gebirgsschlag o. ä. Überlasten, mit einem in einer Innenbohrung im Ventilgehäuse gegen die Kraft einer Ventilfeder verschieblichen eine Sachbohrung aufweisenden Steuerkolben, der eine einem Federraum zugeordnete Stellschraubenbohrung absperrt und der mit einem Ventilkolben mit Sackbohrung und Radialbohrungen korrespondierend arbeitet, der in einer erweiterten und in eine Ausgleichskammer übergehenden Großbohrung verschieblich und übereine Rechteckform und eine große Härte aufweisende und vorgespannt eingebrachte Dichtringe abgedichtet geführt ist und die als Austrittsbohrungen dienenden Querbohrungen bei Druckbeaufschlagung durch Überfahren der Dichtringe mit der Großbohrung verbindet.

Derartige, auch als Gebirgsschlagventile bezeichnete Druckbegrenzungsventile werden dort eingesetzt, wo durch auftretende Überlast eine Beschädigung des Hydraulikausbaues im untertägigen Steinkohlenbergbau zu befürchten ist. Die Hydraulikstempel werden sowohl als Einzelstempel wie auch in Ausbaugestellen mit derartigen Druckbegrenzungsventilen ausgerüstet, um bei Überlastung bleibende Beschädigungen oder gar Zerstörungen und damit Gefährdungen für die Bergleute zu verhindern. Aus der DE-OS 28 30 891 ist ein Druckbegrenzungsventil bekannt, bei dem über eine Ventilfeder, die zwischen Verschlußschraube und Ventilkolben angeordnet ist, Überdrücke im Hydrauliksystem abgebaut werden. An den Ventilteller oder Federteller ist ein kegel- oder kugelförmiger Verschließkörper angeformt, der bei auftretender Überlast aus dem Ventilsitz angehoben wird. An den Kolben ist ein Dämfungszylinder angeformt, der die Durchströmöffnung beschränkt. Diese bekannten Druckbegrenzungsventile verfügen über eine unzureichende Schließsicherheit. Darüber hinaus ist eine richtige Auslegung der Feder insbesondere sehr schwierig, was aber Voraussetzung für ein sicheres Ansprechen eines derartigen Gebirgsschlagventiles ist. Weiterentwicklungen hierzu sind der DE-OS 33 14 837, der DE-OS 39 22 894 und schließlich der DE-OS 39 29 094 zu entnehmen. Die beiden letztgenannten Druckbegrenzungsventile verfügen über eine Bauform, die immerhin rd. 1 000 l/min. Durchflußmenge zuläßt, wobei die Ventile ausgesprochen geringe Abmessungen aufweisen. Dies wird dadurch erreicht, daß der Ventilkolben als Rohrhülse ausgebildet ist, die mit einem Steuerkolben zusammenarbeitet, so daß beide gemeinsam als Baueinheit in der Innenbohrung des Ventilgehäuses verschiebbar sind. Der bekannte Steuerkolben weist eine Sackbohrung und Radialbohrungen auf, über die das Druckmedium in den Federraum strömen kann, wenn das Ventil anspricht. Die notwendigen Differenzflächen werden somit durch den gestuften Steuerkolben bzw. durch die unterschiedlichen Durchmesser von Steuerkolben und Ventilkolben erreicht. Nachteilig bei diesem und dem aus der DE-OS 39 29 094 bekannten Druckbegrenzungsventil sind die noch ungenügenden Schließwerte, wobei es insbesondere zu einem Wiederschließen des Ventiles und damit zu einem Flattern des Ventilkolbens kommt, weil beide Kolben sich gemeinsam bewegen müssen. Die zum Einsatz kommende Ventilfeder muß entsprechend groß und lang sein, wodurch eine aufwendigere Bauart für derartige Druckbegrenzungsventile erforderlich ist.

Die im Prinzip gleichen Probleme treten auch bei einem sogenannten vorgesteuerten Ventil gemäß DE-A-25 47 646 auf. Als Steuerventil dient ein solches mit kegelförmigem Kolben, dessen Öffnungswerte ungenau sind. Da die zuführende (Sack-)Bohrung den gleichen Durchmesser aufweist wie die Durchtrittsbohrung im Ventilkolben, sind genaue Öffnungswerte nicht einzuhalten. Der Ventilkolben ist zweiteilig ausgebildet, so daß eine weitere Feder erforderlich wird, die nicht nur als zusätzlicher Unsicherheitsfaktor zu werten ist, sondern auch die Baumaße wesentlich erhöht. Letzteres ist gerade für den untertägigen Bergbau und seine sehr beengten Verhältnisse von Nachteil.

Der vorliegenden Erfindung liegt daher die Aufgabe zugrunde, ein genaue öffnendes und schließendes Druckbegrenzungsventil mit hohen Durchflußwerten zu schaffen, bei dem ein Flattern des Ventilkolbens vermieden wird.

Die Aufgabe wird erfindungsgemäß dadurch gelöst, daß Steuerkolben und Ventilkolben getrennte Einheiten sind, daß der Ventilkolben gegen eine sich steuerkolbenseitig abstützende Stellfeder verschieblich ist und eine Durchtrittsbohrung aufweist, die über einen kleineren Durchmesser verfügt als die Sackbohrung des Steuerkolbens und daß die oberhalb des Ventilkolbens ausgebildete Ausgleichskammer über eine im Ventilkolben ausgebildete obere, die Ausgleichskammer mitbildende Sackbohrung und die Durchtrittsbohrung mit der auf der anderen Seite des Ventilkolbens ausgebildeten unteren Sackbohrung verbunden ist und einen gegenüber der Großbohrung vergrößerten Durchmesser aufweist.

Ein derart ausgebildetes Druckbegrenzungsventil öffnet zunächst der Steuerkolben mit der größeren Sackbohrung, wobei die Druckflüssigkeit durch die Durchtrittsbohrung hindurch direkt in die vergrößerte Ausgleichskammer und von dort in die Sackbohrung gelangt. Steigt die Durchflußmenge bzw. der anstehende Druck, öffnet auch der einen wesentlich größeren Durchmesser aufweisende Ventilkolben und die Druckflüssigkeit kann durch die Querbohrungen austreten, so daß eine Beeinflussung oder gar Gefährdung des zugeordneten Hydraulikaggregates, d. h. Stempels nicht zu befürchten ist. Da der Ventilkolben gegen die Kraft einer Feder öffnen muß und die Öffnungsquerschnitte entsprechend gewählt sind, ist ein genaues Öffnen und Schließen des Gesamtsystems sichergestellt. Ein Flattern oder gar frühzeitiges Schließen des Ventilkolbens kann nicht auftreten und vor allem kann eine einzige und relativ kleine Stellfeder verwendet werden, was für die Gesamtbauabmaße und die gesamte Auslegung des Druckbegrenzungsventils wesentliche Vorteile mit sich bringt. Ein Flattern oder versehentliches Schließen des Ventilkolbens wird dadurch verhindert, daß dieser ja nicht gegen den Außendruck von rd. 1 bar öffnet, sondern vielmehr gegen den Druck der Stellfeder und des in der Ausgleichskammer anstehenden Mediums. Wie erwähnt wird damit eine entsprechend kleine Bemessung der Stellfeder ermöglicht.

Nach einer zweckmäßigen Ausbildung der Erfindung ist vorgesehen, daß die Ausgleichskammer im Bereich zwischen den Querbohrungen und dem den Steuerkolben aufnehmenden Gehäuseoberteil ausgebildet ist. Die Funktionsweise der Ausgleichskammer ist so bleibend gewahrt, auch wenn der Ventilkolben weitgehend hochgefahren ist, um die Druckflüssigkeit über die Querbohrungen abführen zu können. Der kleinere Steuerkolben bleibt somit so lange in geöffneter Stellung, wie in der Ausgleichskammer entsprechender Druck ansteht. Ist dieser dann größer, als der in der Großbohrung anstehende Druck, schließt das System bzw. schließt der Ventilkolben automatisch wieder.

Eine weitere zweckmäßige Ausbildung ist die, bei der der Ventilkolben beidseitig mit einer Sackbohrung ausgerüstet ist, wobei die der Ausgleichskammer zugeordnete Sackbohrung die Stellfeder aufnimmt. Diese Ausbildung des Ventilkolbens ermöglicht eine deutliche Verkürzung des Gesamtdruckbegrenzungsventils, ohne daß dadurch die Funktionsweise beeinträchtigt ist. Gleichzeitig erreicht man eine gewisse Führung der Stellfeder und sichert für die Ausgleichskammer ein ausreichendes Volumen.

Eine sichere Stellung der Stellfeder wird erfindungsgemäß dadurch erreicht, daß die Sackbohrung mit der Stellfeder einen rechtwinklig zu der Außenwand des Ventilkolbens verlaufenden Boden aufweist. Die Stellfeder steht damit sicher auf diesem Boden auf und eine rechtzeitige und vor allen Dingen ausreichende Abstützung des Ventilkolbens ist sichergestellt. Denkbar ist es auch, auf dem Boden eine Art Aufsatz anzuordnen, um so eine zusätzliche Führung der Stellfeder vorzugeben, doch ist dies in aller Regel bei den hier in Rede stehenden Druckbegrenzungsventilen nicht erforderlich.

Eine günstige Strömung wird erfindungsgemäß dadurch in der Großbohrung sichergestellt, daß die Sackbohrung mit den Radialbohrungen einen kegelförmig ausgebildeten Boden aufweist, in dessen Spitze die Durchtrittsbohrung angesetzt ist. Die vor dem Ansprechen des Ventilkolbens die Durchtrittsbohrung durchfließende Druckflüssigkeit wird somit zielgerichtet aus der Großbohrung in die Ausgleichskammer und von dieser auf die Innenbohrung bzw. Sackbohrung des Steuerkolbens zugeführt. Damit ist gleichzeitig auch ein rechtzeitiges Ansprechen des Steuerkolbens begünstigt.

Zur genauen Positionierung des Steuerkolbens sieht die Erfindung vor, daß der Steuerkolben in einem Schraubteil mit Innenbohrung untergebracht ist, das in das Ventilgehäuse von der Ausgleichskammer einschraubbar ist. Da die Ausgleichskammer ein entsprechendes Volumen hat, ist eine Handhabung entsprechend leicht möglich und damit eine immer gleiche Anordnung des Steuerkolbens innerhalb des gesamten Ventils gesichert. Außerdem kann vorteilhaft auf vorhandene Bauteile, insbesondere auch den Steuerkolben zurückgegriffen werden. Das Einschrauben wird dadurch begünstigt, daß hier im Bereich der Ausgleichskammer der Verbindungsbereich zwischen Ober- und Unterteil vorgesehen ist. Während der Montage kann so das Oberteil so weit vorgerüstet und der Steuerkolben bereits positioniert werden, daß dann anschließend beide Teile nur ineinandergesetzt und verschraubt werden müssen. Die Stellfeder wird während dieses Vorganges automatisch miteingespannt, ohne daß es weiterer Maßnahmen bedarf.

Das Einschrauben des Schraubteils in das Oberteil des Ventilgehäuses wird dadurch erleichtert, daß die Innenbohrung auf der der Ausgleichskammer zugewandten Seite einen Innensechskant aufweist. Über diesen Innensechskant kann mit üblichen Hilfsmitteln der Schraubvorgang beschleunigt vorgenommen und die jeweils vorgesehene Position des Schraubteils genau eingehalten werden, was durch entsprechende Vorsprünge u. ä. abgesichert ist. Abgedichtet wird die Ausgleichskammer gegen die Verschraubung durch O-Ringe, die in eine Nut des Schraubteils eingelegt sind und zwar im Bereich des Innenseckskantes.

Während der Innensechskant einen etwas über der Sackbohrung des Steuerkolbens liegenden Durchmesser aufweist, ist die dahinterliegende Innenbohrung etwas größer bemessen. Es ist vorgesehen, daß die Innenbohrung im Anschluß an den Innensechskant den Steuerkolben aufnehmend ausgebildet ist und am oberen Ende eine Nut für einen als O-Ring ausgebildeten Dichtring aufweist. Der Steuerkolben kann somit von einer Seite her in die Innenbohrung eingeschoben werden, um dann an dem entsprechenden Ansatz im Übergangsbereich zum Innensechskant festgehalten zu werden. Er kann dann während der Montage und des Einschraubens des Schraubteils seine Position nicht mehr verlassen und ist somit in der Funktionsposition genau angeordnet. Der O-Ring sorgt für eine wirksame Abdichtung und damit ein sicheres Ansprechen des Steuerkolbens. Dieses Abdichten wird erfindungsgemäß noch dadurch verbessert, daß der Steuerkolben mit vier Radialbohrungen ausgerüstet ist, deren Durchmesser größer als die Schnurstärke des O-Ringes ist. Der O-Ring wird entsprechend verformt und damit in seinen Sitz gepreßt, um auf diese Art und Weise eine optimale Dichtwirkung zu erreichen.

Weiter vorne ist bereits darauf hingewiesen worden, daß das Verhältnis der Durchmesser von Durchtrittsbohrung und Sackbohrung des Steuerkolbens wichtig für die Funktionstüchtigkeit des Druckbegrenzungsventils ist. Ein Optimum ist erreicht, wenn die Durchtrittsbohrung einen Durchmesser von 2,5 bis 7,5, vorzugsweise 5 mm und die Sackbohrung des Steuerkolbens einen Durchmesser von 7 bis 8, vorzugsweise 7,5 mm aufweist. Die Sackbohrung des Steuerkolbens ist somit genau von der Fläche her doppelt so groß wie die Durchtrittsbohrung. Eine sichere Funktion des Ventils ist gegeben.

Die Erfindung zeichnet sich insbesondere dadurch aus, daß ein einwandfrei und sicher öffnendes und schließendes Druckbegrenzungsventil geschaffen ist, das mit einer ausgesprochen kleinen Stellfeder auskommt, so daß das gesamte Druckbegrenzungsventil über entsprechend begrenzte Abmessungen verfügt. Aufgrund der gewählten und erreichten Abmessungen von Steuerkolben und Ventilkolben und der Durchtrittsbohrung können Werte von 8 000 l/min. und mehr erreicht werden. Dabei weist die Sackbohrung des Ventilkolbens einen Durchmesser von 25 mm, die Durchtrittsbohrung von 5 mm und die Sackbohrung des Steuerkolbens von 7,5 mm auf. Der große Kolben, d. h. der Ventilkolben öffnet nicht gegen den Außendruck, sondern gegen den Ausgleichsdruck in der Ausgleichskammer, also beispielsweise 300 bar, wodurch die geringen Abmaße bei der Stellfeder möglich werden. Der Einsatz von Teflondichtungen sichert das Ganze ab, da beim Überfahren dieser Dichtungen hohe Drücke auftreten und aufgrund der zum Einsatz kommenden großen Durchmesser des Ventilkolbens nur mit derartigen Dichtungen eine wirksame Abdichtung erreicht werden kann.

Weitere Einzelheiten des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: ein Druckbegrenzungsventil mit Steuerkolben und Ventilkolben im geschlossenen Zustand und
- Fig. 2: ein aufgrund aufgetretener Überlast abspritzendes Druckbegrenzungsventil gemäß Fig. 1.

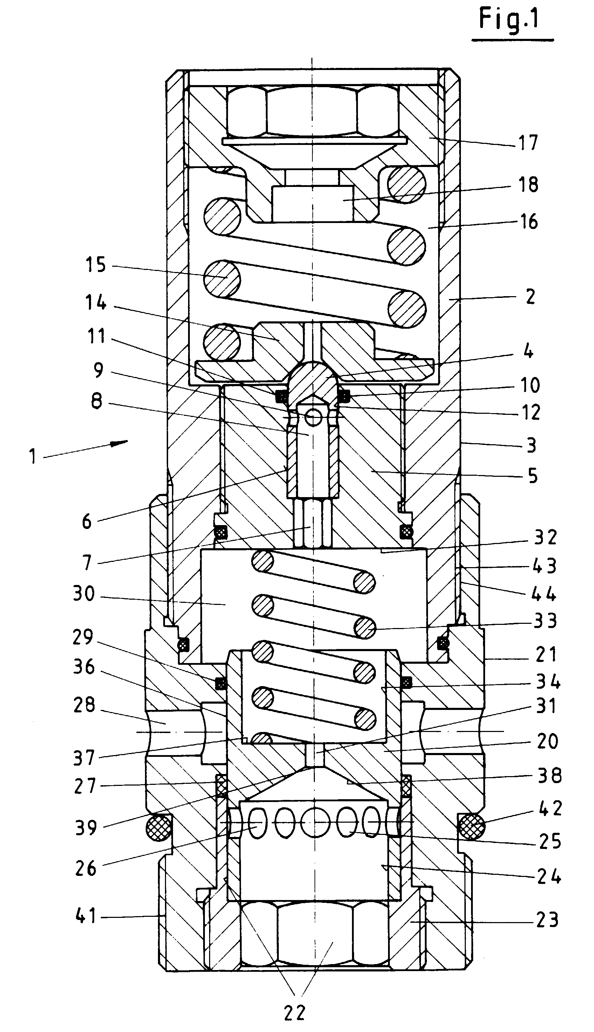

Fig. 1 zeigt ein derartiges Druckbegrenzungsventil 1 im Längsschnitt, wobei das Druckbegrenzungsventil 1 aus einem stabilen Ventilgehäuse 2 besteht, das bei dem hier dargestellten Ausführungsbeispiel ein Oberteil 3 und das damit verschraubbare Unterteil bzw. Gehäuseteil 21 aufweist.

Im Oberteil 3 ist der Steuerkolben 4 untergebracht, der in ein Schraubteil 5 bzw. genauer gesagt in dessen Innenbohrung 6 eingesetzt ist. Dieses Schraubteil 5 kann über einen Innensechskant 7 leicht in das Oberteil 3 von der Ausgleichskammer, die weiter hinten noch erläutert ist, eingeschraubt werden.

Der Steuerkolben 4 verfügt über eine Sackbohrung 8 mit relativ großem Durchmesser (7,5 mm) und davon im Bereich des Tiefsten abgehende Radialbohrungen 9. Die Fig. 1 verdeutlicht, daß hier lediglich vier Radialbohrungen 9 vorgesehen sind, die relativ große Durchmesser aufweisen.

Die Durchmesser der Radialbohrungen 9 sind größer als der Durchmesser des in der Nut 10 sitzenden O-Ringes 11, der im oberen Ende 12 der Innenbohrung 6 in der Nut 10 sitzend angeordnet ist. Hier kann es sich um einen O-Ring aus üblichem Gummimaterial handeln, der durch die Druckbeaufschlagung sich verformt und dadurch optimal abdichtet.

Der Kopf des Steuerkolbens 4 reicht in einen Ventilteller 14 bzw. in eine auf dessen Unterseite angeordnete Ausnehmung hinein, wobei dieser Ventilteller zur Abstützung der Ventilfeder 15 dient. Die Ventilfeder 15 stützt sich auf der gegenüberliegenden Seite des Federraums 16 gegen die Stellschraube 17 ab, so daß eine entsprechende Vorspannung durch Verstellen der Stellschraube 17 möglich ist. Die beim Öffnen des Steuerkolbens 4 in den Federraum 16 austretende Druckflüssigkeit wird durch die Stellschraubenöffnung 18 in die Atmosphäre abgeführt.

Ähnlich wie der Steuerkolben 4 im Oberteil 3 angeordnet ist, ist der Ventilkolben 20 dem Unterteil 21 bzw. dem Gehäuseteil 21 zugeordnet. Das Gehäuseteil 21 verfügt über eine entsprechende Großbohrung 22, in der der Ventilkolben 20 verschieblich untergebracht ist. Von der Unterseite her ist der Ventilkolben 20 über ein Schraubteil 23 eingeführt, wobei die Sackbohrung 24 mit den Radialbohrungen 25, 26 der Großbohrung bzw. der entsprechenden Gehäuseöffnung zugeordnet ist. Die Sackbohrung 24 hat einen Durchmesser von 25 mm im dargestellten Beispiel, so daß entsprechend große Mengen an Druckflüssigkeit bei entsprechendem Öffnen des Ventilkolbens 20 ausströmen können.

Die Sackbohrung 24 weist am oberen Ende insgesamt beim dargestellten Beispiel 14 Radialbohrungen 25, 26 auf. Dicht oberhalb dieser Radialbohrungen 25, 26 ist der Dichtring 27 angeordnet, der aus Teflon besteht und so eingespannt angeordnet ist, daß er die notwendige Dichtwirkung erreicht. Die Fig. 1 verdeutlicht, daß er hierzu rechteckförmig oder auch einen quadratischen Querschnitt aufweist und durch das Einschrauben des Schraubteils 23 so vorgespannt werden kann, daß er dicht an der Außenwand 36 des Ventilkolbens 20 anliegt. Dadurch kann Druckflüssigkeit an der Außenwand 36 vorbei nicht in den Bereich der Querbohrungen 28 gelangen.

Auf der gegenüberliegenden Seite der Querbohrungen 28 ist ein weiterer aus Teflon bestehender Dichtring 29 angeordnet, so daß auch die Druckflüssigkeit, die durch die Durchtrittsbohrung 31 hindurch in die Ausgleichskammer 30 gelangte Druckflüssigkeit hier nicht an der Außenwand 36 vorbei in Richtung Querbohrungen 28 fließen kann.

Die Ausgleichskammer 30 weist einen gegenüber der Großbohrung 22 vergrößerten Durchmesser auf. Sie bildet quasi das untere Ende des Oberteils 3, das in das Unterteil eingeschraubt ist. Über entsprechende Dichtringe ist für das notwendige Abdichten Sorge getragen.

Auf der Steuerkolbenseite 32 einerseits und dem Ventilkolben andererseits liegt eine Stellfeder 33 an, die dafür sorgt, daß der Ventilkolben 20 bei entsprechender Überlast erst zum vorgegebenen Zeitpunkt öffnet. Zunächst einmal wird er durch die Stellfeder 33 in der in Fig. 1 gezeigten Position gehalten, so daß die Druckflüssigkeit lediglich durch die Durchtrittsbohrung 31 hindurch in die Ausgleichskammer 30 gelangen kann. Erst wenn der entsprechende Druck überschritten ist, öffnet dann auch der Ventilkolben 20 und gibt der Druckflüssigkeit die Möglichkeit, durch die Großbohrung 22, die großvolumige Sackbohrung 24 und die Radialbohrungen 25, 26 und schließlich die Querbohrungen 28 hindurch in die Atmosphäre auszutreten.

Zur Verringerung der Baulänge des Druckbegrenzungsventils 1 ist in dem Ventilkolben 20 eine die Stellfeder 33 aufnehmende Sackbohrung 34 angeordnet. Diese Sackbohrung 34 liegt plan auf dem Boden 37 auf, während der gegenüberliegende Boden 38 im Bereich der Sackbohrung 24 kegelförmig ausgebildet ist, wobei die Spitze 39 quasi in die Durchtrittsbohrung 31 übergeht.

Oberteil 3 und Unterteil 21 werden miteinander verschraubt. Sie weisen dazu korrespondierende Innengewinde 43 und Außengewinde 44 auf. Das gesamte Druckbegrenzungsventil 1 wird ebenfalls in Druckmittelverbraucher, also beispielsweise Stempel eingedreht, wozu es am Unterteil 21 ein als Außengewinde ausgebildetes Gewinde 41 aufweist. Über den Dichtring 42 ist für eine entsprechende Abdichtung des Systems nach außen hin Sorge getragen.

Nicht dargestellt ist in Fig. 1 eine Vorrichtung, über die der Federraum 16 saubergehalten wird. Die entsprechenden Teile sind im Bereich der Stellschraube 17 bzw. der Stellschraubenbohrung 18 lediglich angedeutet. Sie entsprechen dem Stand der Technik.

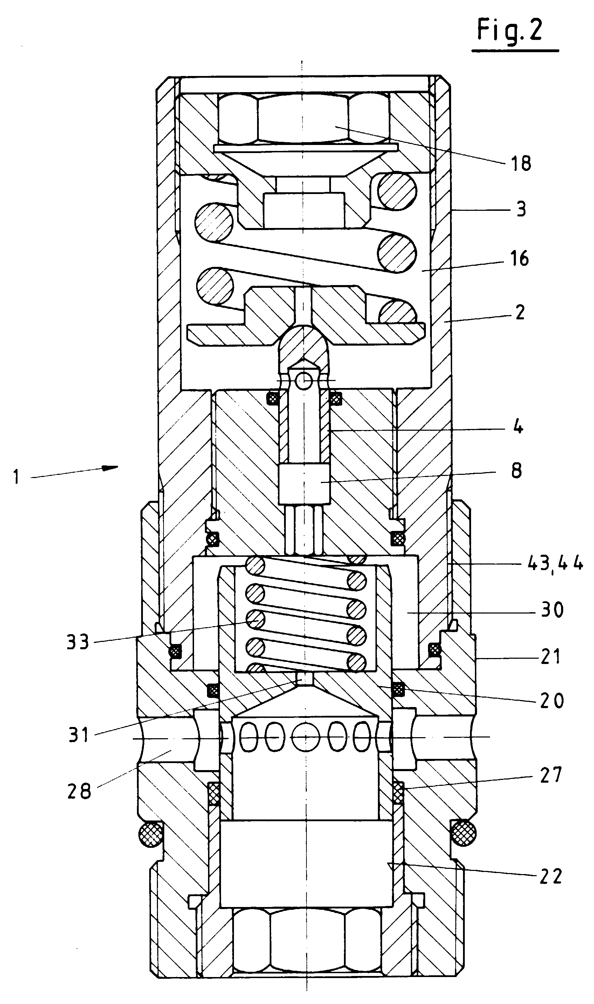

Fig. 2 zeigt das Druckbegrenzungsventil 1 im geöffneten Zustand. Der Ventilkolben 20 hat den Dichtring 27 überfahren und die Druckflüssigkeit kann durch die Querbohrungen 28 austreten. Gleichzeitig tritt Druckflüssigkeit auch durch die Durchtrittsbohrung 31 in die Ausgleichskammer 30 ein und von dort durch die Sackbohrung 8 des Steuerkolbens 4 in den Federraum 16 und von dort über die Stellschraubenbohrung 18 in die Atmosphäre.

Sinkt der Druck in der Ausgleichskammer 30 nun ab, so schließt der Steuerkolben 4 und auch der Ventilkolben 20 fährt gleichzeitig in die aus Fig. 1 ersichtliche Lage zurück, so daß das Ventil dann wieder geschlossen ist.

## Patentansprüche

1. Druckbegrenzungsventil zum Schutz hydraulischer Einheiten, des hydraulischen Strebausbaues untertägiger Betriebe gegen Gebirgsschlag o. ä. Überlasten, mit einem in einer Innenbohrung (6) im Ventilgehäuse (2) gegen die Kraft einer Ventilfeder (5) verschieblichen, eine Sackbohrung (8) aufweisenden Steuerkolben (4), der eine einem Federraum (16) zugeordnete Stellschraubenbohrung (18) absperrt und der mit einem Ventilkolben (20) mit Sackbohrung (24) und Radialbohrungen (25, 26) korrespondierend arbeitet, der in einer erweiterten und in eine Ausgleichskammer (30) übergehenden Großbohrung (22) verschieblich und über eine Rechteckform und eine große Härte aufweisende und vorgespannt eingebrachte Dichtringe (27, 29) abgedichtet geführt ist und der als Austrittsbohrungen dienenden Querbohrungen (28) bei Druckbeaufschlagung durch Überfahren der Dichtringe (27, 29) mit der Großbohrung (22) verbindet,
**dadurch gekennzeichnet,**
daß Steuerkolben (4) und Ventilkolben (20) getrennte Einheiten sind, daß der Ventilkolben (20) gegen eine sich steuerkolbenseitig abstützende Stellfeder (33) verschieblich ist und eine Durchtrittsbohrung (31) aufweist, die über einen kleineren Durchmesser verfügt als die Sackbohrung (8) des Steuerkolbens (4) und daß die oberhalb des Ventilkolbens (20) ausgebildete Ausgleichskammer (30) über eine im Ventilkolben (20) ausgebildete obere, die Ausgleichskammer (30) mitbildende Sackbohrung (34) und die Durchtrittsbohrung (31) mit der auf der anderen Seite des Ventilkolbens (20) ausgebildeten unteren Sackbohrung (24) verbunden ist und einen gegenüber der Großbohrung (22) vergrößerten Durchmesser aufweist.

2. Druckbegrenzungsventil nach Anspruch 1,
**dadurch gekennzeichnet,**
daß die Ausgleichskammer (30) im Bereich zwischen den Querbohrungen (28) und dem den Steuerkolben (4) aufnehmenden Gehäuseoberteil (3) ausgebildet ist.

3. Druckbegrenzungsventil nach Anspruch 1,
**dadurch gekennzeichnet,**
daß der Ventilkolben (20) beidseitig mit einer Sackbohrung (24, 34) ausgerüstet ist, wobei die der Ausgleichskammer (30) zugeordnete obere Sackbohrung (34) die Stellfeder (33) aufnimmt.

4. Druckbegrenzungsventil nach Anspruch 3,
**dadurch gekennzeichnet,**
daß die obere Sackbohrung (34) mit der Stellfeder (33) einen rechtwinklig zu der Außenwand (36) des Ventilkolbens (30) verlaufenden Boden (37) aufweist.

5. Druckbegrenzungsventil nach Anspruch 1,
**dadurch gekennzeichnet,**
daß die Sackbohrung (24) mit den Radialbohrungen (25, 26) einen kegelförmig ausgebildeten Boden (38) aufweist, in dessen Spitze (39) die Durchtrittsbohrung (31) angesetzt ist.

6. Druckbegrenzungsventil nach Anspruch 1,
**dadurch gekennzeichnet,**
daß der Steuerkolben (4) in einem Schraubteil (3) mit Innenbohrung (6) untergebracht ist, das in das Ventilgehäuse (2) von der Ausgleichskammer (30) einschraubbar ist.

7. Druckbegrenzungsventil nach Anspruch 6,
**dadurch gekennzeichnet,**
daß die Innenbohrung (6) auf der der Ausgleichskammer (30) zugewandten Seite einen Innensechskant (7) aufweist.

8. Druckbegrenzungsventil nach Anspruch 6 und Anspruch 7,
**dadurch gekennzeichnet,**
daß die Innenbohrung (6) im Anschluß an den Innensechskant (7) den Steuerkolben (4) aufnehmend ausgebildet ist und am oberen Ende (41) eine Nut (10) für einen als O-Ring (11) ausgebildeten Dichtring aufweist.

9. Druckbegrenzungsventil nach Anspruch 8,
**dadurch gekennzeichnet,**
daß der Steuerkolben (4) mit vier Radialbohrungen (9) ausgerüstet ist, deren Durchmesser größer als die Schnurstärke des O-Ringes (11) ist.

10. Durckbegrenzungsventil nach Anspruch 1,
**dadurch gekennzeichnet,**
daß die Durchtrittsbohrung (31) einen Durchmesser von 2,5 bis 7,5, vorzugsweise 5 mm und die Sackbohrung (8) des Steuerkolbens (4) einen Durchmesser von 7 bis 8, vorzugsweise 7,5 mm aufweist.

## Claims

1. Pressure relief valve for protecting hydraulic units, for hydraulic face support in underground operations, against rock burst or similar overload, with a control piston (4), which has a blind hole (8) and is displaceable in an internal hole (6) in the valve housing (2) against the force of a valve spring (5), said control piston blocking an adjusting screw hole (18) allocated to a spring area (16) and operating in accord with a valve piston (20) with a blind hole (24) and radial holes (25, 26), which is displaceable in a widened large hole (22) merging into a compensating chamber (30) and is guided over sealing rings (27, 29) with a rectangular shape and a high degree of hardness, which are put in place under initial stress, and which connects transverse holes (28) serving as exit holes with the large hole (22) on application of pressure by moving over the sealing rings (27, 29), characterised in that the control piston (4) and valve piston (20) are separate units; that the valve piston (20) is displaceable against an adjusting spring (33) supported on the control piston side and has a passage (31), which is provided with a smaller diameter than the blind hole (8) of the control piston (4); and that the compensation chamber (30) constructed above the valve piston (20) is connected via an upper blind hole (34), which is constructed in the valve piston (20) and also forms the compensation chamber (30), and the passage (31) to the lower blind hole (24) constructed on the other side of the valve piston (20), and has a diameter which is larger than the large hole (22).

2. Pressure relief valve according to Claim 1,
characterised in that the compensation chamber (30) is constructed in the region between the transverse holes (28) and the upper portion of the housing (3) receiving the control piston (4).

3. Pressure relief valve according to Claim 1,
characterised in that the valve piston (20) is provided with a blind hole (24, 34) on both sides, whereby the upper blind hole (34) allocated to the compensation chamber (30) receives the adjusting spring (33).

4. Pressure relief valve according to Claim 3,
characterised in that with the adjusting spring (33), the upper blind hole (34) has a base (37) extending at right angles to the external wall (36) of the valve piston (30).

5. Pressure relief valve according to Claim 1,
characterised in that with the radial holes (25, 26), the blind hole (24) has a spherical base (38), into the tip (39) of which the passage (31) is placed.

6. Pressure relief valve according to Claim 1,
characterised in that the control piston (4) is housed in a screw part (3) with an internal hole (6) which may be screwed into the valve housing (2) from the compensation chamber (30).

7. Pressure relief valve according to Claim 6,
characterised in that the internal hole (6) has a hexagon socket (7) on the side facing the compensation chamber (30).

8. Pressure relief valve according to Claim 6 and Claim 7,
characterised in that adjoining the hexagon socket (7), the internal hole (6) is constructed to receive the control piston (4), and at the upper end (41), has a groove (10) for a sealing ring constructed as an O-ring (11).

9. Pressure relief valve according to Claim 8,
characterised in that the control piston (4) is fitted with four radial holes (9), the diameters of which are greater than the cord thickness of the O-ring (11).

10. Pressure relief valve according to Claim 1,
characterised in that the passage (31) has a diameter of 2.5 to 7.5 mm, preferably 5 mm, and the blind hole (8) of the control piston (4) has a diameter of 7 to 8 mm, preferably 7.5 mm.

## Revendications

1. Vanne de limitation de pression pour la protection d'unités hydrauliques d'exploitation hydraulique par longues tailles d'exploitations souterraines contre les mouvements de terrain ou surcharges similaires, comportant un piston de commande (4) monté coulissant dans un alésage intérieur (6) d'un carter de vanne (2) contre la force d'un ressort de vanne (5) et présentant un trou borgne (8), qui verrouille un alésage taraudé de réglage (18) associé à une chambre de ressort (16) et qui travaille en correspondance avec un piston de vanne (20) présentant un trou borgne (24) et des trous radiaux (25, 26), qui est guidé à coulisse dans un alésage (22) de grand diamètre évasé, débouchant dans une chambre de détente (30), et qui est guidé de façon étanche par une forme rectangulaire et des bagues d'étanchéité (27, 29) introduites de façon précontrainte et présentant une grande dureté, et qui relie des perçages transversaux (28) servant de perçages de sortie lors d'une sollicitation de pression par franchissement des bagues d'étanchéité (27, 29), caractérisée en ce que les pistons de commande (4) et les pistons de vanne (20) sont des unités séparées, en ce que le piston de vanne (20) est monté coulissant à l'encontre d'un ressort de réglage (23) s'appuyant du côté du piston de commande et comporte un alésage de passage (31), qui présente un plus petit diamètre que le trou borgne (8) du piston de commande (4), et en ce que la chambre de détente (30) formée au-dessus du piston de vanne (20) est reliée au trou borgne (24) inférieur agencé sur l'autre côté du piston de vanne (20) par un trou borgne (34) supérieur faisant partie de la chambre de détente (30) et réalisé dans le piston de vanne (20), et par l'alésage de passage (31) relié au trou borgne (24) inférieur formé sur l'autre côté du piston de vanne (20), et présente un diamètre supérieur à celui du grand alésage (22).

2. Vanne selon la revendication 1, caractérisée en ce que la chambre de détente (30) est agencée dans la zone située entre les alésages transversaux (28) et la partie supérieure du carter recevant le piston de commande (4).

3. Vanne selon la revendication 1, caractérisée en ce que le piston de vanne (20) est pourvu d'un trou borgne (24, 34) de chaque côté, et le trou borgne supérieur (34) associé à la chambre de détente (30) reçoit le ressort de réglage (33).

4. Vanne selon la revendication 3, caractérisée en ce que le trou borgne supérieur (34) comporte avec le ressort de réglage (33) un fond (37) qui s'étend perpendiculairement à la paroi extérieure (36) du piston de vanne (20).

5. Vanne selon la revendication 1, caractérisée en ce que le trou borgne (24) avec ses alésages radiaux (25, 26) comporte un fond conique (38) à la pointe (39) duquel est agencé l'alésage de passage (31).

6. Vanne selon la revendication 1, caractérisée en ce que le piston de commande (4) est disposé dans une partie filetée (3) présentant un alésage intérieur (6), et en ce que cette partie filetée peut être vissée dans le carter de vanne (2) à partir de la chambre de détente (30).

7. Vanne selon la revendication 6, caractérisée en ce que l'alésage intérieur (6) comporte une paroi intérieure hexagonale (7) sur son côté orienté vers la chambre de détente (30).

8. Vanne selon les revendications 6 et 7, caractérisée en ce que l'alésage intérieur (6) est formé dans le prolongement de l'hexagone intérieur (7) de façon à recevoir le piston de commande (4) et comporte à son extrémité supérieure (41) une gorge (10) agencée pour recevoir une bague torique (11) d'étanchéité.

9. Vanne selon la revendication 8, caractérisée en ce que le piston de commande (4) est équipé de quatre alésages radiaux (9) dont le diamètre est supérieur à l'épaisseur de la bague torique (11).

10. Vanne selon la revendication 1, caractérisée en ce que l'alésage de passage (31) présente un diamètre de 2,5 à 7,5mm, de préférence 5mm, et le trou borgne (8) du piston de commande (4) présente un diamètre de 7 à 8mm, de préférence 7,5mm.
